# EUROPEAN PATENT APPLICATION

(11) **EP 4 832 499 A1**
(43) Date of publication of application: **28.10.2026**
(21) Application number: 26161998.5
(22) Date of filing: 03.03.2026
(51) Int. Cl.: H04N 23/65, G06F 3/06

(54) **CONTROLLER UNIT, METHOD FOR CONTROLLER UNIT, AND STORAGE MEDIUM**

(30) Priority: 21.04.2025 JP 2025069945
(71) Applicant: Canon Kabushiki Kaisha, Tokyo 146-8501 (JP)
(72) Inventor: HIGASHI, Hidenori, Tokyo, 146-8501 (JP)
(74) Representative: Canon Europe Limited

(57) **Abstract**

A controller unit includes a lifetime measurement unit configured to measure a lifetime of a second non-volatile storage unit, an access speed measurement unit configured to measure a first access speed indicating an access speed to a first non-volatile storage unit and a second access speed indicating an access speed to the second non-volatile storage unit, and a control unit configured to perform control to save an image indicating content stored in a volatile storage unit in at least one of the first non-volatile storage unit and the second non-volatile storage unit based on the lifetime, the second access speed, and the first access speed.

## Description

### Technical Field

The present disclosure relates to a controller unit, a method for the controller unit, and a storage medium.

### BACKGROUND

In recent years, access speeds to SD cards have increased significantly, and real-time storage of high-resolution, high-frame-rate moving images captured by cameras has come to be performed. The total amount of data that can be written into flash memory including an SD card is limited, and when an extremely large amount of data is written into an SD card in such use cases, the upper limit is reached in a short period of time. It is widely known that flash memory including an SD card has a specified data retention period, and if the retention period elapses in a state where power is not supplied to the SD card, data stored in the SD card is lost. Additionally, writing to flash memory including an SD card shortens the data retention period, and as the miniaturization of integrated circuits further advances, there is a possibility that data stored in the SD card may be lost in a shorter period of time.

Meanwhile, there is a demand for network cameras that reduce power consumption by capturing images only when necessary and turning OFF the power when capturing is not necessary instead of continuously capturing images (e.g. for 24 hours per day) as in monitoring cameras. In such network cameras, image-capturing is not performed continuously, but instead power-ON and power-OFF occur at a high frequency; therefore, it is very important that power-ON be completed in as short a time as possible and a camera promptly transitions to a state in which image capturing is possible.

For example, according to Japanese Patent Laid-Open No. 2014-174881, a technique is known in which hibernation data is stored in a built-in flash memory and an SD card to extend the lifetimes of the built-in flash memory and the SD card. Additionally, according to Japanese Patent Laid-Open No. 2014-174710, a technique is known in which hibernation data of a high-priority application is stored in an SD card, thereby enabling the application to be started at a high speed at the next start-up.

With the conventional technique described in Japanese Patent Laid-Open No. 2014-174881, however, even in a case where an SD card having a very high access speed is used, it is not possible to perform high-speed start-up processing that prioritizes start-up speed. Furthermore, according to the conventional technique described in Japanese Patent Laid-Open No. 2014-174710, in a case where a heavily used SD card is used, prioritizing start-up speed results in further shortening the lifetime of the SD card.

### SUMMARY

The present disclosure is directed to, in a case where a secure digital (SD) card having a high access speed is used, enabling high-speed start-up by storing hibernation data in the SD card. Furthermore, the present disclosure is directed to, in a case where an SD card close to the end of its write life is used, enabling secure start-up by storing hibernation data in a built-in flash memory.

The present disclosure in its first aspect provides a controller unit as specified in claim 1. Optional features are specified in claims 2 and 5 to 13.

The present disclosure in its second aspect provides a controller unit as specified in claim 3. Optional features are specified in claims 4 to 7 and 10.

The present disclosure in its third aspect provides a method for a controller unit as specified in claim 14.

The present disclosure in its fourth aspect provides a storage medium as specified in claim 15.

Features of the present disclosure will become apparent from the following description of embodiments with reference to the attached drawings. The following description of embodiments is described by way of example.

### BRIEF DESCRIPTION OF THE DRAWINGS

Fig. 1 is a functional block diagram according to an embodiment of the present disclosure.
Fig. 2 is a flowchart illustrating a first embodiment of the present disclosure.
Fig. 3 is a flowchart illustrating a second embodiment of the present disclosure.
Fig. 4 is a flowchart illustrating a third embodiment of the present disclosure.

### DESCRIPTION OF THE EMBODIMENTS

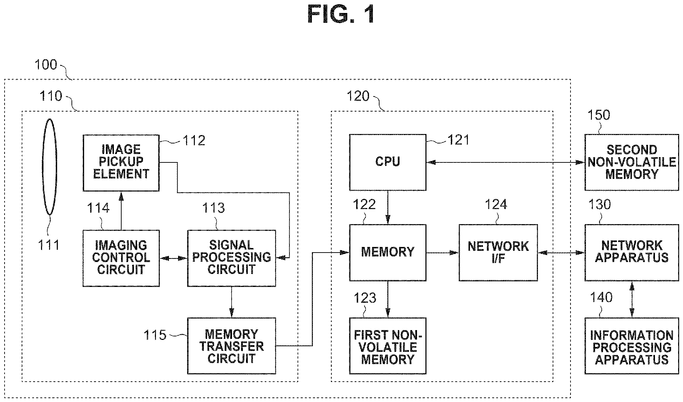

Embodiments of the present disclosure will be described in detail below with reference to the accompanying drawings. Fig. 1 is a configuration diagram illustrating a camera according to an embodiment of the present disclosure.

A camera 100 according to the present embodiment of the present disclosure will be described below with reference to Fig. 1.

The camera 100 according to the present embodiment transfers images from an imaging unit 110 to a controller unit 120, and transmits the images to an information processing apparatus 140 via a network.

An imaging unit 110 in the camera 100 includes an optical lens 111, an image pickup element 112, a signal processing circuit 113, an imaging control circuit 114, a memory transfer circuit 115, and a group of pictures (GOP) interval setting unit (not illustrated).

The image pickup element 112 converts light formed through the optical lens 111 into electric charge and generates an imaging signal. The signal processing circuit 113 inputs the imaging signal generated by imaging by the image pickup element 112 and digitizes the imaging signal to generate a captured image.

The imaging control circuit 114 controls the image pickup element 112 at the same cycle as an image output cycle. Additionally, in a case where accumulation time is longer than the image output cycle, the imaging control circuit 114 controls the signal processing circuit 113 to hold captured images in a frame memory of the signal processing circuit 113 during a period in which an imaging signal cannot be output from the image pickup element 112.

The memory transfer circuit 115 transfers captured images digitized by the signal processing circuit 113 to a memory 122 in the controller unit 120.

The controller unit 120 of the camera 100 includes a central processing unit (CPU) 121, the memory 122, a first non-volatile memory 123, and a network interface (I/F) 124. The first non-volatile memory 123 is not removable, and a program for operating the controller unit 120 and setting values are stored in the first non-volatile memory 123. Examples of the first non-volatile memory 123 include a NAND flash (or a built-in flash memory).

As used herein, the term "non-removable" and "not removable" mean that the first non-volatile memory 123 is physically built into the camera 100 and cannot be removed by a user in normal usage conditions. Examples of the first non-volatile memory 123 include a memory directly mounted on a board of the camera 100 and a memory connected to a board of the camera 100 by flexible printed circuits. That is, the first non-volatile memory 123 is fixed to the inside of the camera 100 and is not accessible to general users, except in cases where specialized skills or knowledge are required for maintenance or repair.

A network apparatus 130 enables communication between the camera 100 and the information processing apparatus 140 via the network I/F 124. Examples of the network apparatus 130 include a switching hub. Examples of the information processing apparatus 140 include a personal computer and computer equipment capable of storing images.

A second non-volatile memory 150 is removable, and a digital image transferred to the memory 122 can be stored in the second non-volatile memory 150. Examples of the second non-volatile memory 150 include a secure digital (SD) card.

Being removable means that the second non-volatile memory 150 can be easily removed, replaced, or exchanged by the user. An SD card is a typical example of such a memory. Such recording media are mounted on a device through a slot or a port and can be removed as necessary for data transfer or for use in another device. This makes it easy for the user to handle and manage data and provides flexibility in terms of increasing recording capacity and physically carrying data.

Each of the first non-volatile memory 123 and the second non-volatile memory 150 is a non-volatile memory. Additionally, the memory 122 is a volatile storage memory.

### (First Embodiment)

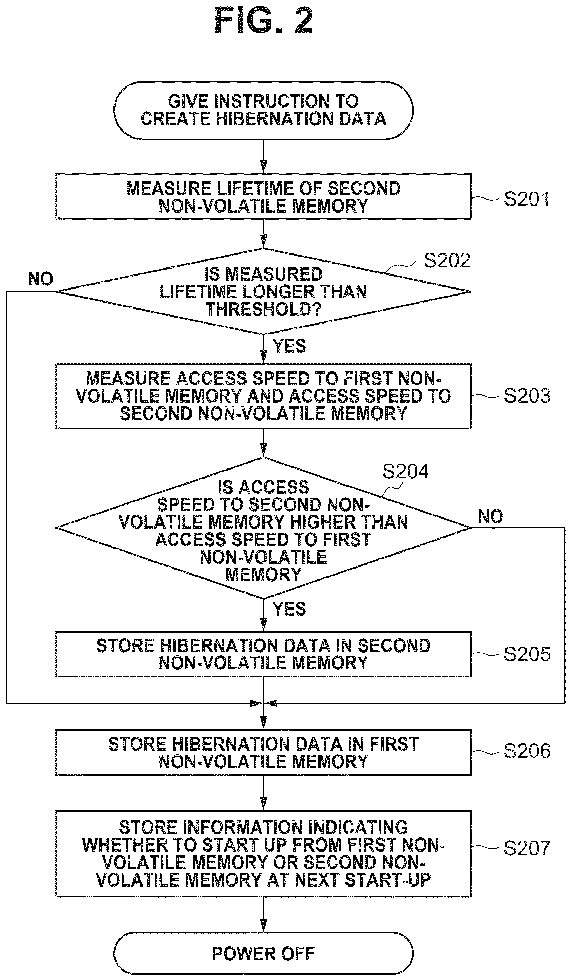

Fig. 2 illustrates processing performed by the controller unit 120 of the camera 100 to measure the remaining lifetimes and the access speeds of the first non-volatile memory 123 and the second non-volatile memory 150 and determine a storage destination for hibernation data based on a result of the measurement. The processing in Fig. 2 may be performed when the camera 100 is powered OFF (at the time of power shutdown), or may be performed at a freely selected timing. A first embodiment of the present disclosure will be described with reference to Fig. 2.

In step S201, when an instruction to create hibernation data is given to the camera 100 during operation, the controller unit 120 of the camera 100 measures the lifetime of the second non-volatile memory 150. As a lifetime measurement method for measuring the lifetime, the controller unit 120 may use acquired self-monitoring analysis and reporting technology (S.M.A.R.T) information. Alternatively, the controller unit 120 may acquire the lifetime using a vendor-specific command of an SD standard, such as Command 56. Still alternatively, the controller unit 120 of the camera 100 may measure the lifetime based on an amount of data written by itself. In step S202, the controller unit 120 determines whether the measured lifetime is longer than a predetermined threshold. In a case where the measured lifetime is shorter than (falls below) the predetermined threshold (NO in step S202), the processing proceeds to step S206. In step S206, the controller unit 120 stores the content of the memory 122 as hibernation data in the first non-volatile memory 123 and turns OFF the power (power shutdown). In a case where the measured lifetime is longer than (exceeds) the predetermined threshold (YES in step S202), the processing proceeds to step S203. In step S203, the controller unit 120 measures access speeds to the first non-volatile memory 123 and the second non-volatile memory 150. As an access speed measurement method for measuring the access speeds, for example, a plurality of files having different sizes is preliminarily prepared in each of the first non-volatile memory 123 and the second non-volatile memory 150, and the controller unit 120 reads each file to the memory 122 to measure the access speeds.

In step S204, the controller unit 120 determines whether the access speed to the second non-volatile memory 150 is higher than the access speed to the first non-volatile memory 123. In a case where the access speed to the second non-volatile memory 150 is lower than the access speed to the first non-volatile memory 123 (NO in step S204), the processing proceeds to step S206. In step S206, the controller unit 120 stores the content (stored content) of the memory 122 in the first non-volatile memory 123 as hibernation data, and turns OFF the power.

In a case where the access speed to the second non-volatile memory 150 is higher than the access speed to the first non-volatile memory 123 (YES in step S204), the processing proceeds to step S205. In step S205, the controller unit 120 stores the content of the memory 122 in the second non-volatile memory 150 as hibernation data.

Subsequently, in step S206, the controller unit 120 stores the hibernation data stored in step S205 in the first non-volatile memory 123. In step S207, the controller unit 120 stores information indicating whether to perform start-up from the first non-volatile memory 123 or the second non-volatile memory 150 at the next start-up, and turns OFF the power.

The reason for storing the hibernation data in the first non-volatile memory 123 in the case where the access speed to the second non-volatile memory 150 is higher than the access speed to the first non-volatile memory 123 is that the second non-volatile memory 150 is removable and, if it is removed at the next start-up, the start-up cannot be performed.

Additionally, storing the hibernation data in the second non-volatile memory 150 or the first non-volatile memory 123 may also be referred to as saving.

### (Second Embodiment)

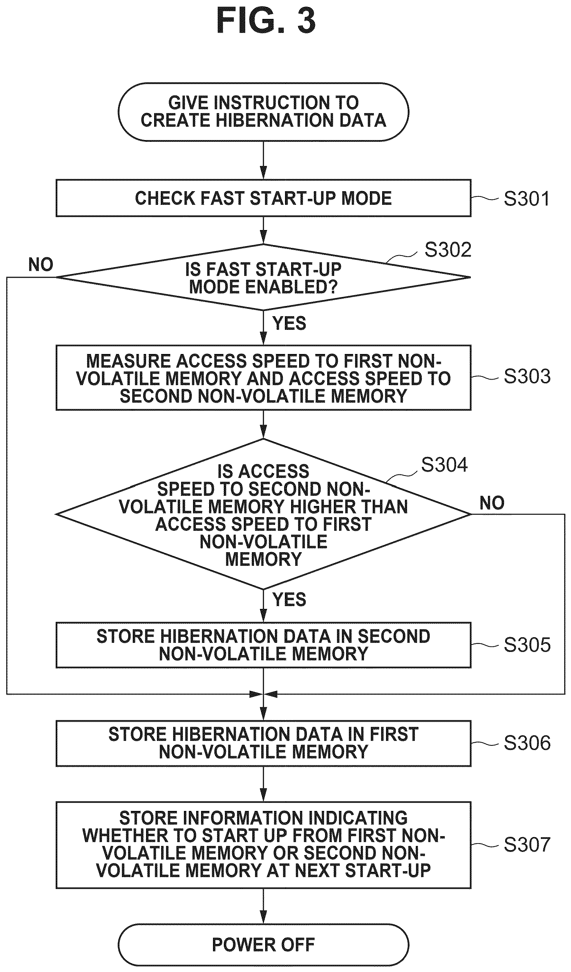

Fig. 3 illustrates processing performed by the controller unit 120 of the camera 100 to check a mode set for the next start-up and determine a storage destination for the hibernation data depending on the mode set for the start-up. A second embodiment of the present disclosure will be described with reference to Fig. 3.

In step S301, when an instruction to create hibernation data is given to the camera 100 during operation, the controller unit 120 of the camera 100 checks a mode set for the next start-up. Examples of the start-up mode of the camera 100 include a plurality of start-up modes, such as a fast start-up mode for starting up at high speed and quickly transitioning to a state where the camera 100 can perform imaging or operation, and a normal start-up mode for sequentially starting and executing programs from the first non-volatile memory 123. Information indicating which of the fast start-up mode and the normal start-up mode is set as a start-up mode is stored in the first non-volatile memory 123, the second non-volatile memory 150, or the like. The fast start-up mode mentioned herein is a mode set based on an instruction from the user, and is implemented by direct memory access (DMA) transfer of the hibernation data from the second non-volatile memory 150 to the memory 122. In step S302, the controller unit 120 determines whether the fast start-up mode is enabled. In a case where the fast start-up mode is not enabled (NO in step S302), the processing proceeds to step S306. In step S306, the controller unit 120 stores the content of the memory 122 as hibernation data in the first non-volatile memory 123 and turns OFF the power. In a case where the fast start-up mode is enabled (YES in step S302), the processing proceeds to step S303. In step S303, the controller unit 120 measures access speeds to the first non-volatile memory 123 and the second non-volatile memory 150. As an access speed measurement method for measuring the access speeds, for example, a plurality of files having different sizes is preliminarily prepared in each of the first non-volatile memory 123 and the second non-volatile memory 150, and the controller unit 120 reads each file to the memory 122 to measure the access speeds. In step S304, the controller unit 120 determines whether the access speed to the second non-volatile memory 150 is higher than the access speed to the first non-volatile memory 123. In a case where the access speed to the second non-volatile memory 150 is lower than the access speed to the first non-volatile memory 123 (NO in step S304), the processing proceeds to step S306. In step S306, the controller unit 120 stores the content of the memory 122 in the first non-volatile memory 123 as hibernation data, and turns OFF the power. In a case where the access speed to the second non-volatile memory 150 is higher than the access speed to the first non-volatile memory 123 (YES in step S304), the processing proceeds to step S305. In step S305, the controller unit 120 stores the content of the memory 122 in the second non-volatile memory 150 as hibernation data. Subsequently, in step S306, the controller unit 120 stores the hibernation data stored in step S305 in the first non-volatile memory 123. In step S307, the controller unit 120 stores information indicating whether to perform start-up from the first non-volatile memory 123 or the second non-volatile memory 150 at the next start-up, and turns OFF the power.

The reason for storing the hibernation data in the first non-volatile memory 123 in the case where the access speed to the second non-volatile memory 150 is higher than the access speed to the first non-volatile memory 123 is that the second non-volatile memory 150 is removable and, if it is removed at the next start-up, the start-up cannot be performed.

The hibernation data to be stored in the first non-volatile memory 123 may be equivalent to the hibernation data to be stored in the second non-volatile memory 150 or may be part of the hibernation data to be stored in the second non-volatile memory 150.

### (Third Embodiment)

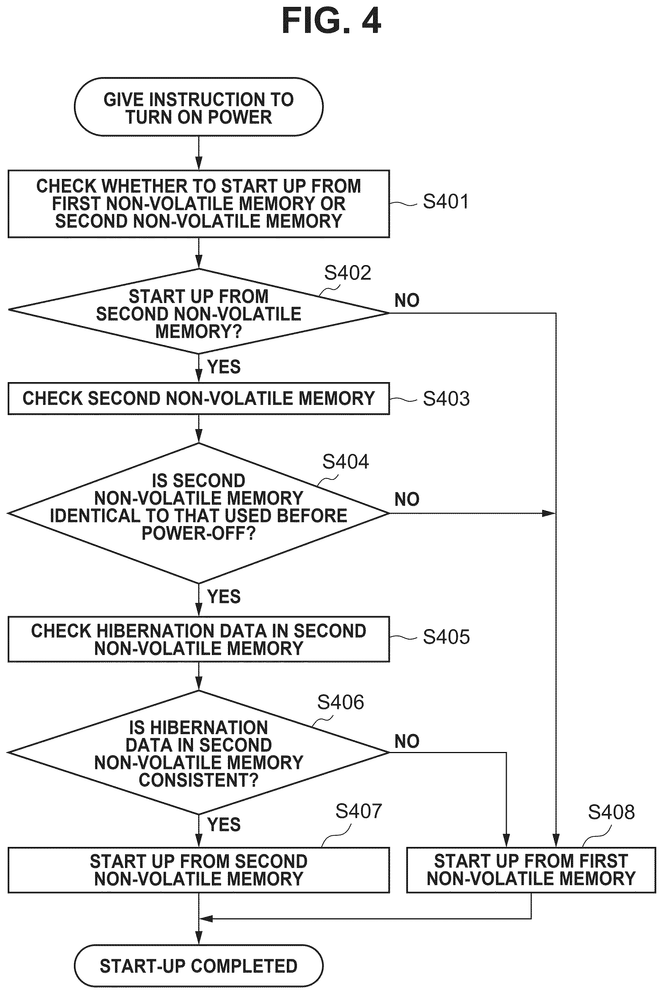

Fig. 4 illustrates an example of the flow of processing of starting the camera 100 using the hibernation image stored in the first non-volatile memory 123 or the hibernation image stored in the second non-volatile memory 150 in the first and second embodiments. A third embodiment of the present disclosure will be described with reference to Fig. 4.

In step S401, when the camera 100 is powered ON, the controller unit 120 checks the content stored at the time of the previous power-OFF (power shutdown), indicating whether to perform start-up from the first non-volatile memory 123 or the second non-volatile memory 150. In step S402, the controller unit 120 determines whether the content indicates start-up from the second non-volatile memory 150. In a case where the content indicates start-up from the second non-volatile memory 150 (YES in step S402), the processing proceeds to step S403. In step S403, the controller unit 120 checks whether the second non-volatile memory 150 is identical to that used before the camera 100 is powered OFF. In a case where the content indicates start-up from the first non-volatile memory 123 (NO in step S402), the processing proceeds to step S408. In step S408, the controller unit 120 performs start-up using the hibernation image stored in the first non-volatile memory 123 and the start-up is completed. In step S404, the controller unit 120 determines whether the second non-volatile memory 150 is identical to that used before the power-OFF. In a case where the second non-volatile memory 150 is different from that used before the power-OFF (NO in step S404), the processing proceeds to step S408. In step S408, the controller unit 120 performs start-up from the hibernation image stored in the first non-volatile memory 123 and the start-up is completed. In a case where the second non-volatile memory 150 is identical to that used before the power-OFF (YES in step S404), the processing proceeds to step S405. In step S405, the controller unit 120 checks hibernation data stored in the second non-volatile memory 150.

In step S406, the controller unit 120 determines whether the hibernation data stored in the second non-volatile memory 150 has expected contents, that is, has consistency. In a case where the hibernation data does not have expected contents, that is, lacks consistency (NO in step S406), the processing proceeds to step S408. In step S408, the controller unit 120 performs start-up from the hibernation image stored in the first non-volatile memory 123 and the start-up is completed.

In a case where the hibernation data has expected contents, that is, has consistency (YES in step S406), the processing proceeds to step S407. In step S407, the controller unit 120 performs start-up from the hibernation image stored in the second non-volatile memory 150 and the start-up is completed.

The controller unit 120 checks and determines whether the second non-volatile memory 150 is identical to that used before the power-OFF based on a serial number of the second non-volatile memory 150. Alternatively, the controller unit 120 may determine that the second non-volatile memory 150 is identical to that used before the power-OFF based on a match between their manufacturers and/or a match between product names.

As described above, the controller unit 120 measures the write life and the access speed of the SD card used by the user, and determines whether to store the hibernation data in the built-in flash memory or the SD card based on a result of the measurement. This makes it possible to perform start-up in a short period of time in a case where an SD card having a high access speed is used, while protecting user data in the SD card.

The controller unit 120 may determine whether to store the hibernation data in the built-in flash memory or the SD card based on interfaces, instead of making a comparison between the access speed of the SD card and that of the built-in flash memory. For example, in the case of an SD card compliant with an SD Express standard, the controller unit 120 may make a comparison between a speed of Peripheral Component Interconnect Express (PCIe), which is an interface of the SD card compliant with the SD Express standard, and a speed of an interface of the built-in flash memory. However, in a case where the camera 100 does not support the SD Express standard, it does not operate in an SD Express mode but operates in an Ultra High Speed-I (UHS-I) mode even if the SD card is compliant with the SD Express standard. In this case, the controller unit 120 may make a comparison between the speed of the UHS-I as the interface of the SD card and the speed of the interface of the built-in flash memory.

In the present disclosure, an SD card has been described as an example of the second non-volatile memory 150; however, any medium may be used as long as it is removable. For example, the second non-volatile memory 150 may be a MultiMediaCard (MMC), a CompactFlash (CF) card, a CFast card, a CFexpress card, an XQD card, or the like. Additionally, the SD card is not limited to a full size SD card, and may be a microSD card, a miniSD card, or the like.

While the embodiments of the present disclosure have been described above, the present disclosure is not limited to these embodiments and can be modified and changed in various manners within the spirit and scope of the present disclosure.

According to the present disclosure, depending on a state of an SD card used by the user, it becomes possible to perform optimal behavior, such as prioritizing the lifetime of the SD card or prioritizing start-up speed.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

The following numbered clauses form part of the description of the present application. The claims follow the clauses and are indicated accordingly.

### CLAUSES

Clause 1. An information processing apparatus comprising:
at least one processor or circuit configured to function as:
   first non-volatile storage means configured to be non-removable;
   second non-volatile storage means configured to be removable;
   lifetime measurement means for measuring a lifetime of the second non-volatile storage means;
   access speed measurement means for measuring a first access speed indicating an access speed to the first non-volatile storage means and a second access speed indicating an access speed to the second non-volatile storage means;
   saving means for saving an image indicating content stored in volatile storage means at time of power shutdown in the first non-volatile storage means or the second non-volatile storage means; and
   control means for performing control to save the image indicating the stored content of the volatile storage means in at least one of the first non-volatile storage means and the second non-volatile storage means based on the lifetime, the second access speed, and the first access speed.
Clause 2. The information processing apparatus according to clause 1, wherein, in a case where the lifetime exceeds a predetermined threshold and the second access speed is higher than the first access speed, the control means is configured to perform control to save the image in the second non-volatile storage means.
Clause 3. An information processing apparatus comprising:
   first non-volatile storage means configured to be non-removable;
   second non-volatile storage means configured to be removable;
   start-up mode setting means for setting a start-up mode for next start-up;
   access speed measurement means for measuring a first access speed indicating an access speed to the first non-volatile storage means and a second access speed indicating an access speed to the second non-volatile storage means;
   saving means saving an image indicating content stored in a volatile storage means at time of power shutdown in the first non-volatile storage means or the second non-volatile storage means; and
   control means for performing control to save the image indicating the stored content of the volatile storage means in at least one of the first non-volatile storage means and the second non-volatile storage means based on the start-up mode, the second access speed, and the first access speed.
Clause 4. The information processing apparatus according to clause 3, wherein, in a case where a fast start-up mode is set as the start-up mode and the second access speed is higher than the first access speed, the control means is configured to perform control to save the image in the second non-volatile storage means.
Clause 5. The information processing apparatus according to clause 2 or 4,
   wherein the first non-volatile storage means is configured to be fixed inside the information processing apparatus and to be non-removable by a user in normal usage conditions, and
   wherein the second non-volatile storage means is configured to be mounted on a slot of the information processing apparatus and to be removable by the user.
Clause 6. The information processing apparatus according to clause 2 or 4, wherein the control means is configured to perform control to save at least part of the stored content indicated by the image saved in the second non-volatile storage means in the first non-volatile storage means.
Clause 7. The information processing apparatus according to clause 2 or 4, wherein, in a case where the second non-volatile storage means is not removed at next start-up and it is determined that the image read out from the second non-volatile storage means has predetermined consistency, the control means is configured to perform start-up processing based on the image read out from the second non-volatile storage means.
Clause 8. The information processing apparatus according to clause 2, wherein, in a case where the lifetime is less than the predetermined threshold, the control means is configured to perform control to save the image in the first non-volatile storage means.
Clause 9. The information processing apparatus according to clause 2, wherein, in a case where the lifetime is less than the predetermined threshold, the control means is configured to perform control not to save the image in the second non-volatile storage means.
Clause 10. The information processing apparatus according to clause 2 or 4, wherein the access speed measurement means is configured to measure the first and second access speeds based on a speed of reading data stored in the first non-volatile storage means and a speed of reading data stored in the second non-volatile storage means.
Clause 11. The information processing apparatus according to clause 1, wherein the lifetime measurement means is configured to measure the lifetime by acquiring self-monitoring analysis and reporting technology, S.M.A.R.T, information from the second non-volatile storage means.
Clause 12. The information processing apparatus according to clause 1, wherein the lifetime measurement means is configured to measure the lifetime based on information acquired by transmitting a vendor-specific command of a secure digital, SD, standard to the second non-volatile storage means.
Clause 13. The information processing apparatus according to clause 1, wherein the lifetime measurement means is configured to measure the lifetime based on an amount of data written by the information processing apparatus to the second non-volatile storage means. Clause 14. An information processing method comprising:
   performing lifetime measurement to measure a lifetime of a second non-volatile storage means;
   performing access speed measurement to measure a first access speed indicating an access speed to first non-volatile storage means and a second access speed indicating an access speed to the second non-volatile storage means;
   saving an image indicating content stored in volatile storage means at time of power shutdown in the first non-volatile storage means or the second non-volatile storage means; and
   performing control to save the image indicating the stored content of the volatile storage means in at least one of the first non-volatile storage means and the second non-volatile storage means based on the lifetime, the second access speed, and the first access speed,
   wherein, in a case where the lifetime exceeds a predetermined threshold and the second access speed is higher than the first access speed, the control includes control to save the image in the second non-volatile storage means.
Clause 15. A storage medium causing a computer to execute the information processing method according to clause 14.

## Claims

1. A controller unit (120) configured to communicate with a first non-volatile storage means (123) configured to be non-removable from a camera (100) and a second non-volatile storage means (150) configured to be removable from the camera, wherein the controller unit comprises:
a lifetime measurement means for measuring a lifetime of the second non-volatile storage means;
an access speed measurement means for measuring a first access speed indicating an access speed to the first non-volatile storage means and a second access speed indicating an access speed to the second non-volatile storage means;
a saving means for saving an image indicating content stored in volatile storage means at time of power shutdown in the first non-volatile storage means or the second non-volatile storage means; and
a control means for performing control to save the image indicating the stored content of the volatile storage means in at least one of the first non-volatile storage means and the second non-volatile storage means based on the lifetime, the second access speed, and the first access speed.

2. The controller unit (120) according to claim 1, wherein, in a case where the lifetime exceeds a predetermined threshold and the second access speed is higher than the first access speed, the control means is configured to perform control to save the image in the second non-volatile storage means.

3. A controller unit (120) configured to communicate with a first non-volatile storage means (123) configured to be non-removable from a camera (100) and a second non-volatile storage means (150) configured to be removable from the camera, wherein the controller unit comprises:
a start-up mode setting means for setting a start-up mode for next start-up;
an access speed measurement means for measuring a first access speed indicating an access speed to the first non-volatile storage means and a second access speed indicating an access speed to the second non-volatile storage means;
a saving means saving an image indicating content stored in a volatile storage means at time of power shutdown in the first non-volatile storage means or the second non-volatile storage means; and
a control means for performing control to save the image indicating the stored content of the volatile storage means in at least one of the first non-volatile storage means and the second non-volatile storage means based on the start-up mode, the second access speed, and the first access speed.

4. The controller unit (120) according to claim 3, wherein, in a case where a fast start-up mode is set as the start-up mode and the second access speed is higher than the first access speed, the control means is configured to perform control to save the image in the second non-volatile storage means (150).

5. The controller unit (120) according to claim 2 or 4,
wherein the first non-volatile storage means is configured to be fixed inside the controller unit and to be non-removable by a user in normal usage conditions, and
wherein the second non-volatile storage means (150) is configured to be mounted on a slot of the controller unit and to be removable by the user.

6. The controller unit (120) according to claim 2 or 4, wherein the control means is configured to perform control to save at least part of the stored content indicated by the image saved in the second non-volatile storage means (150) in the first non-volatile storage means (123).

7. The controller unit (120) according to claim 2 or 4, wherein, in a case where the second non-volatile storage means (150) is not removed at next start-up and it is determined that the image read out from the second non-volatile storage means has predetermined consistency, the control means is configured to perform start-up processing based on the image read out from the second non-volatile storage means.

8. The controller unit (120) according to claim 2, wherein, in a case where the lifetime is less than the predetermined threshold, the control means is configured to perform control to save the image in the first non-volatile storage means.

9. The controller unit (120) according to claim 2, wherein, in a case where the lifetime is less than the predetermined threshold, the control means is configured to perform control not to save the image in the second non-volatile storage means.

10. The controller unit (120) according to claim 2 or 4, wherein the access speed measurement means is configured to measure the first and second access speeds based on a speed of reading data stored in the first non-volatile storage means (123) and a speed of reading data stored in the second non-volatile storage means (150).

11. The controller unit (120) according to claim 1, wherein the lifetime measurement means is configured to measure the lifetime by acquiring self-monitoring analysis and reporting technology, S.M.A.R.T, information from the second non-volatile storage means (150).

12. The controller unit (120) according to claim 1, wherein the lifetime measurement means is configured to measure the lifetime based on information acquired by transmitting a vendor-specific command of a secure digital, SD, standard to the second non-volatile storage means.

13. The controller unit (120) according to claim 1, wherein the lifetime measurement means is configured to measure the lifetime based on an amount of data written by the controller unit to the second non-volatile storage means (150).

14. A method for a controller unit comprising:
performing lifetime measurement to measure a lifetime of a second non-volatile storage means (150);
performing access speed measurement to measure a first access speed indicating an access speed to a first non-volatile storage means (123) and a second access speed indicating an access speed to the second non-volatile storage means;
saving an image indicating content stored in volatile storage means at time of power shutdown in the first non-volatile storage means or the second non-volatile storage means; and
performing control to save the image indicating the stored content of the volatile storage means in at least one of the first non-volatile storage means and the second non-volatile storage means based on the lifetime, the second access speed, and the first access speed,
wherein, in a case where the lifetime exceeds a predetermined threshold and the second access speed is higher than the first access speed, the control includes control to save the image in the second non-volatile storage means.

15. A storage medium causing a computer to execute the method according to claim 14.
